# EUROPEAN PATENT APPLICATION

(11) **EP 0 683 116 A1**
(43) Date of publication of application: **22.11.1995**
(21) Application number: 95830206.9
(22) Date of filing: 17.05.1995
(51) Int. Cl.: B65G 1/137, B65G 1/08, B65G 59/06

(54) **Automatic distributor of stacked packages**

(30) Priority: 18.05.1994 IT BO940094 U
(71) Applicant: PROGETTO AUTOMAZIONE S.r.l., Parma (IT)
(72) Inventor: Argazzi, Ivo, I-Pianoro (Bologna) (IT)
(74) Representative: Dall'Olio, Giancarlo

(57) **Abstract**

An automatic distributor of stacked packages comprises a plurality of storage magazines (10) placed one on another inside a frame structure (1) and slightly inclined with respect to a horizontal plane. Each of the magazine is provided with a plurality of stacking compartments or channels (14) for containing stacks (11) of packages (2). The distributor comprises also ejecting means (30), including, for each stacking compartment (14), a pusher (37) held by a related electromagnet (36) so as to be brought from a rest position (E) to a working position (F), in which the pusher strikes, through an opening (15), the lowermost package (2) of the stack (11) and ejects it from the stacking compartment (14) thus making it fall on transporting means (40). Deflecting means (4) deaden the hits of the packages (2) falling from the upper magazines (10) and convey the ejected packages toward the transporting means (40).

## Description

The present invention relates to an automatic distributor of packages which are stacked inside suitable magazines and then ejected therefrom. The distributor is particularly useful for automation of orders execution in packages distribution centres or in important retail sale stores.

In known distributors which perform the above mentioned functions, the packages are usually stacked in vertical.

An example of such a distributor is the one described in the document EP-A-0 303 000, comprising a modular magazine made of a longitudinal bar with equidistant sockets aimed at retaining vertical walls that define the width of storage compartments for the packages.

Other vertical walls, orthogonal to the previous ones and inserted into grooves made therein, define the length of each storage compartment.

Each storage compartment has an expeller located at the bottom of the modular magazine and designed to eject, after having received a suitable electronic command, the lowermost package of the related stack.

Other similar distributors or constructive particulars relative thereto, are described also in EP-A-0.037.989, DE-C-1.001.813, EP-A-0.192.206, FR-A-2.248.217 and US-A-3.631.992.

Usually, the afore mentioned distributors present disadvantages as far as construction, size change over operations and maintenance operations are concerned, since the moving elements, which have considerable dimensions, are in hard to access positions.

A further known distributor is the one that is the subject of the European Patent Application No. 94830045.4 of the same Applicant.

This distributor has pyramidal symmetrical structure, in which the compartments for containing the packages stacks, are situated on both sides, slightly inclined with respect to a vertical plane.

The said compartments are defined by lateral surfaces of a plurality of flanked metallic omega-shaped bars movably fastened to suitable lateral crosspieces.

Displacement of the omega-shaped bars changes the width of each compartment so as to adjust it in accordance with the package size.

Each stack is held firm inside the respective compartment due to restraining action of the lateral walls thereof and due to gravity effect.

At the bottom of each compartment, there is an opening, turned inward the distributor and adjustable in height, aimed at allowing only the lowermost package of the pile to pass.

At the outer end of the lowermost package, for each compartment, there is situated an ejector that crosses the canal in perpendicular direction and from outside to inside of the distributor, so as to push the said package out through the relative opening and on a longitudinal conveyor designed to carry the packages outside.

Normally, the ejectors are subjected to respective permanent magnets, that keep them in a position in which they do not engage the packages.

They are also controlled by a mechanism that drives into linear reciprocating motion a crossbar, carrying an electromagnet for each ejector, with an attraction force stronger than the aforementioned permanent magnet.

When the movable crossbar is at the extreme outer position, the electromagnets strike against parts of the ejectors made of ferromagnetic material.

Possible activation of the electromagnet, controlled by electronic means, makes the ejector follow the crossbar during its return stroke, and consequently, the lowermost package of the stack is ejected.

Then, with the next stroke of the crossbar, the ejector is brought back to its original extreme outer position, and the electromagnet is deactivated, or activated again if a new selection is required.

The advantages of the above described distributor are given by modular structure and easy access to both the magazines and the mechanical parts.

However, all the occupied space is not used in the best way. Moreover, the magazines elongated shape allows to contain only a limited number of compartments, each of which capable of housing a considerable amount of packages.

The object of the present invention is to propose a distributor for stacked packages that features modular structure, compactness and simple use.

The above mentioned object is obtained in accordance with the contents of claims.

The characteristic features of the present invention are pointed out in the following description with reference to the enclosed drawings, in which:
- Figure 1 shows a schematic side sectional view of an important part of the distributor being the subject of the present invention;
- Figure 2 shows the same view of the distributor as the Fig. 1, but in a different working step;
- Figure 3 shows a sectional view of the distributor taken along line III-III of Fig. 1;
- Figure 4 shows a sectional view of the distributor taken along line IV-IV of Fig. 1;
- Figure 5 shows the particular of Fig. 4 seen in accordance with direction X.

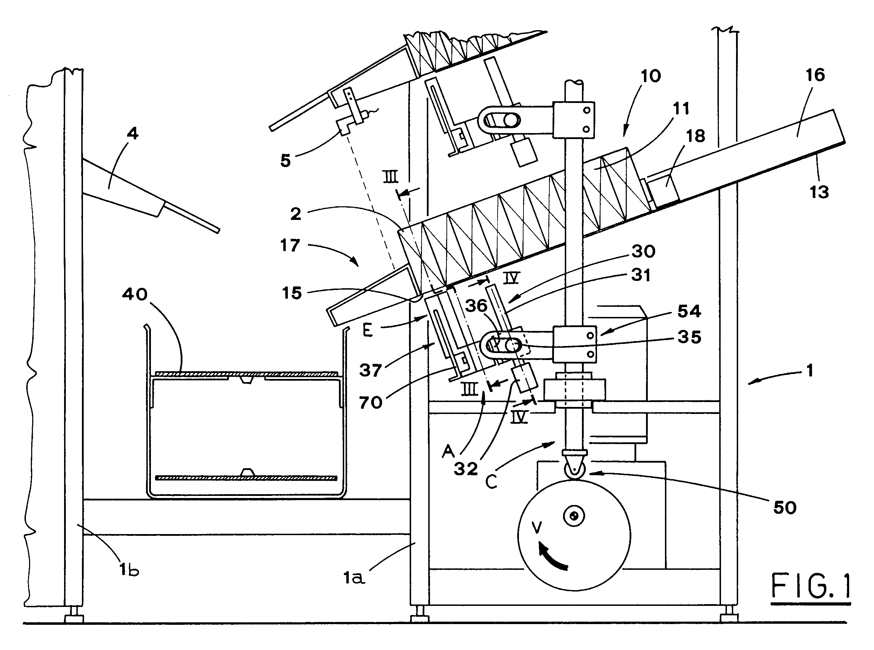

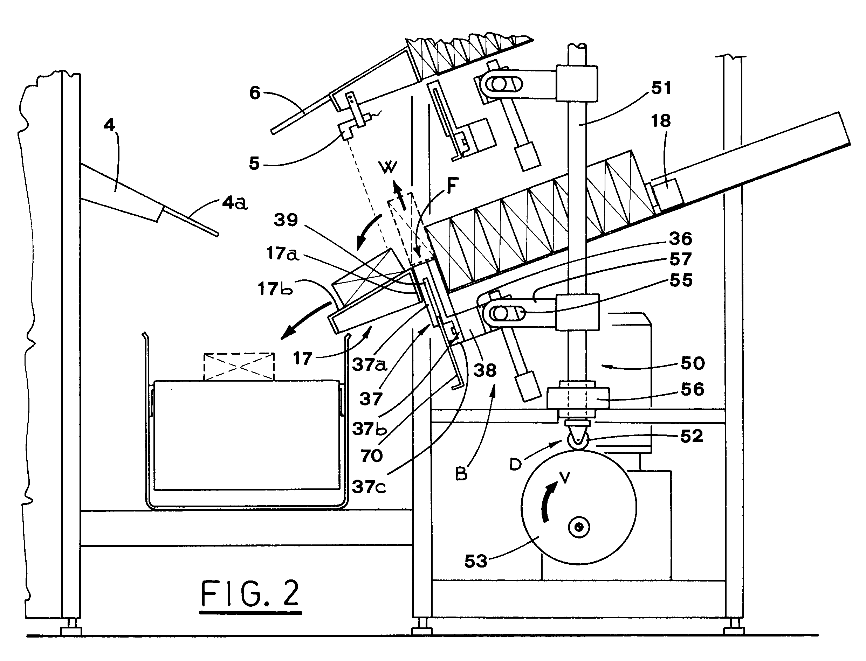

With reference to the Figures 1 and 2, a metallic frame structure 1, supporting the distributor, is divided longitudinally in two sectors, respectively 1a and 1b, arranged side by side and communicating with each other.

A plurality of magazines 10, placed on one another and substantially parallel to one another, are bound to the first sector 1a, so that they keep a position slightly inclined toward the second sector 1b with respect to a horizontal plane.

Each of the magazines features a platform 13, with a plurality of omega-shaped bars 16 movably fastened thereto in transversal direction.

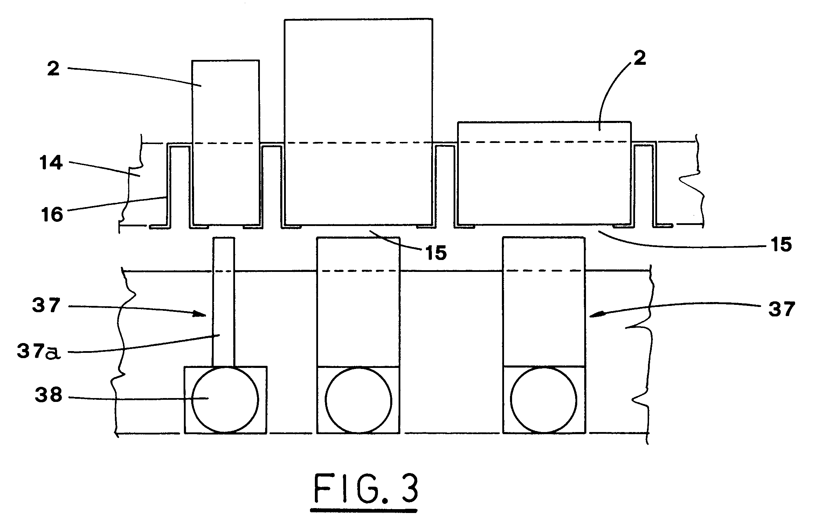

The omega-shaped bars 16 form (see the said Patent Application No. 94830045.4 owned by the Applicant) stacking compartments 14, arranged side by side (Fig. 3), inclined toward the second sector 1b and each of them aimed at containing a stack 11 of packages 2.

Each stacking compartment is not narrower than the relative package that is to be contained therein. The inclination of each magazine 10 depends on the minimum weight of the packages 2, since a downward sliding effect results because of the inclination, the heavier the packages 2 the bigger their downward sliding effect.

It has been experimentally established that the best inclination of the magazines 10 is in the range of 20°, for the packages 2 lighter than 7 grams, and 25° for the packages heavier than 7 grams.

Striking means 17 are rigidly connected to the side of each magazine 10 facing the second sector 1b, as an extension of the same magazine 10.

The said striking means 17 are constituted by a section bar situated in such a way that its external side 17a, perpendicular to the platform 13, acts as a support basis for the stack 11, and its upper side 17b, raised with respect to the platform, is suitably inclined downwards.

Each stacking compartment 14 features a sliding pressing element 18 acting elastically on the stack 11 so as to keep it pressed against the basis 17a.

For each stacking compartment 14, in the platform 13, near the said striking means 17, there is made an opening 15, aimed at allowing access, from below the magazine 10, to the lowermost package 2 of the stack 11.

Ejecting means 30 are situated below each magazine 10 and destined to act on the lowermost package 2 of each stack 11, through the related opening 15, so as to eject the said package 2 upwards from the magazine 10.

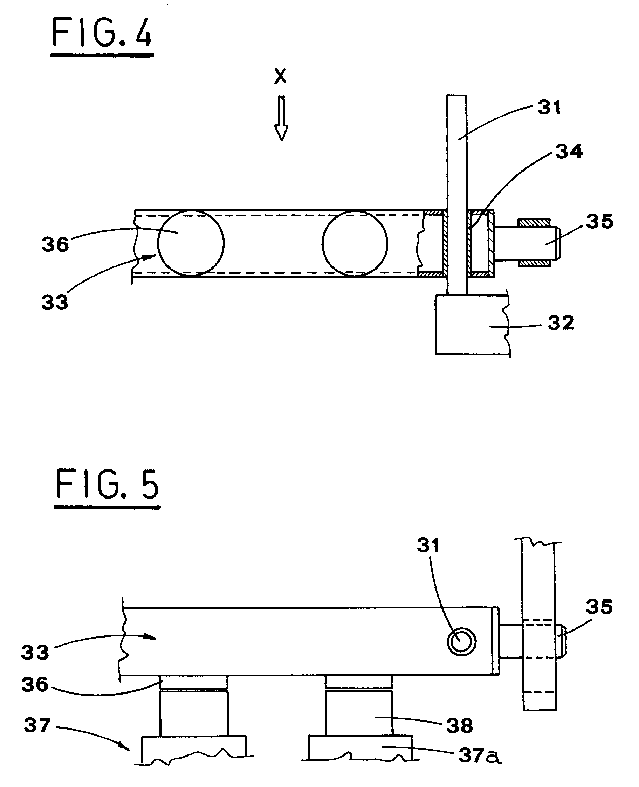

The ejectors have two stems 31, only one of which is seen in the enclosed figures, fastened to the opposite ends of the frame structure 1 by suitable supports 32 (see Figure 4).

The stems 31 are orthogonal to the said magazine 10 and their axes are coplanar. To the said stems, there is connected, through as many seats 34, a horizontal crossbar 33 (Fig. 4), approximately as long as the relative magazine 10, and featuring at its ends a pair of fixed gudgeons 35.

The said crossbar 33 is movable between a lowered position A, far from the platform 13 of the magazine 10 (Fig. 1) and a raised position B, closer to the said platform (Fig. 2).

An electromagnet 36, operated electronically in a known and not shown way, is fastened laterally to the said crossbar, in correspondence with each stacking compartment 14, and is aimed at engaging, when active, a correspondent pusher 37.

The pusher 37 includes an elongated body 37a, arranged parallel to the stems 31 and extending toward the related opening 15; at its lower end, the said body 37a has a "L"-like terminal portion 37b whose short part 37c is aimed at acting as a stop for positioning of the same pusher 37.

A block element 38 of ferromagnetic material is fastened to the terminal portion 37b in such a position that, when the crossbar 33 is in the lowered position A, the electromagnet 36 touches the same block element 38.

The pusher 37 is narrower than the relative opening 15. A longitudinal groove 39, aimed at allowing the pusher 37 to insert in a fixed guide 70, parallel to the crossbar 33, is made in the lower side of the said body 37a.

This groove 39 is designed to guide the said pushers between a rest position E, in which they do not engage the respective openings 15, and a working position F, in which the pushers insert therethrough so as to eject the packages 2 from the respective stacks 11.

Over each stacking compartment 14 there are sensors 5, aimed at detecting the passage of the package 2 ejected by the ejector 30.

Control means 50 are situated symmetrically on both sides of the magazines 10, and each of them is formed by a vertical shaft 51 slidingly connected with the frame structure 1 by insertion into respective seats 56 and featuring, at its lower end, a roller 52 idling on its axis.

This roller touches the outer circumference of a cam 53, rotating in direction V and aimed at guiding alternatively the said shaft 51 between a lower extreme position C and an upper extreme position D.

A horizontal bracket 54 is also fixed removably to the said shaft 51, for each magazine 10 of the distributor.

The bracket 54 has an arm 57 with a slot 55 made therein, near its outer end.

The slot 55 is destined to engage the correspondent fixed gudgeon 35 of the said crossbar 33 and to move the said crossbar, in synchrony with the shaft 51 movements, along the directions imposed by the stems 31.

Transport means 40 are situated in the second sector 1b of the frame structure 1, horizontally and below the magazines 10.

The said transport means 40 are formed by an endless conveying belt that receive the packages 2 ejected by the ejectors 30 so as to carry them outside the distributor, toward the following sorting stations.

According to a preferred embodiment, deflecting means 4 are positioned on the opposite side of the second sector 1b instead of the magazines 10.

The deflecting means 4 are formed by chutes with extensions 4a of soft and elastic material, aimed at receiving the packages 2 coming from the upper magazines and directing them toward the transport means 40, so as to soothe the fall.

Other extensions 6, similar to the above described, are also fastened to the said terminal elements 17 of the said magazines 10, except for the lowest one.

Operation of the distributor is described beginning from an initial situation in which different elements, shown in Fig. 1 are placed as follows: the cam 53 is in the position in which the lower extreme position C of the shaft 51 is defined thereby.

Consequently, each crossbar 33 of the ejectors 30 is in the lowered position A, in which the electromagnets 36, inactive, touch the respective ferromagnetic block elements 38. The pushers 37 are in the rest position E, below the respective stacking compartments 14.

In the next step, the distributor control device, not shown, since known, delivers an activation command for some of the electromagnets 36, that bind, due to magnetic attraction, the correspondent ferromagnetic block elements 38, and therefore, the relative pushers 37 to the respective crossbar 33.

As the rotation of the cam 53 proceeds in the direction V, the shaft 51 is continuously raised until it reaches the upper extreme position D.

Consequently, the crossbars 33 are continuously moved, guided by the brackets 54 along the stems 31 until the crossbars 33 reach the raised position B.

At the same time, the pushers 37 connected with previously activated electromagnets 36, and therefore bound thereto, are made to translate in direction W along the fixed guides 70.

During this translation the pushers 37 enter the respective openings 15 and engage the packages 2 pushing them upwards out of the respective stacking compartment 14 (see Fig. 2) in correspondence with the working position F.

The said packages 2 slide down, due to gravity, along the terminal elements 17 of the magazines 10 and then fall on the conveying belt 40.

The sensor means 5 detect the passage of the packages 2 and send an information about their ejection to the distributor control device.

The packages 2 coming from the upper magazines 10, during their falling, engage alternately the chutes 4 with the relative extensions 4a and the extensions 6 of the magazines below, soothing the fall and avoiding possible damages to packages contents.

The pushers 37 connected with the electromagnets 36 that have not been activated in the this cycle, are not bound thereto and therefore remain in their rest position E.

The ejection cycle is completed when the shaft 51 is lowered up to the lower extreme position C, and consequently, the crossbars 33 reach the lowered position and the pushers 37 reach the rest position E.

One of the advantages of the distributor, subject of the present invention, is its compactness, since the use of slightly inclined magazines placed one on another allows to minimise empty spaces inside the same distributor.

The possibility to put any number of magazines one on another allows the same distributor to use effectively and profitably the vertical dimension of the room in which it has been installed.

Moreover, the described distributor is simple and has an easy access both to the mechanical parts for maintenance operations and to the magazines for the control and possible reload thereof.

A further advantage of the subject distributor is its modular structure: due to its modular structure it is possible to join various modules in respective extension, at the same time keeping them working independently, in order to obtain the distributors of bigger capacity without reducing their efficiency.

Moreover, the said modules can be arranged in parallel lines brought closer so as to use in the best way the available room, maintaining easy access and easy use.

## Claims

1. Automatic distributor for stacked packages, characterised in that it comprises:
a frame structure (1), aimed at supporting a plurality of magazines (10), arranged sidewise in a first sector (1a) of the said frame structure (1), on one another and slightly inclined downwards so as to allow the same magazines to hold, within suitable stacking compartments (14) arranged side by side, relative stacks (11) of packages (2) and to allow the packages sliding toward relative strikers (17), placed directly downstream of relative openings (15), made in correspondence with the same stacking compartments (14);
ejectors (30), situated below each magazine (10) near the said openings (15) and designed to eject upwards, from the magazine (10), the lowermost packages of the stacks (11);
control means (50), situated symmetrically on the sides of the said magazines (10) and aimed at operating the ejectors (30);
deflecting means (4), designed to direct the said ejected packages (2) toward suitable transport means (40) situated below horizontally and transversally with respect to the said magazines (10) and aimed at housing the said packages (2) and bringing them to following sorting stations;
sensor means (5), aimed at detecting the passage of the ejected packages (2).

2. Distributor according to claim 1, characterised in that each of the said magazines (10) features a platform (13), supporting a plurality of omega-shaped bars (16) that are situated transversally and fastened movably to the said platform (13) so as to form the said stacking compartments (14), in their turn closed in their lower part by the above mentioned strikers (17), that are formed by a section bar rigidly connected to the internal side of the said platform (13), the external side (17a) of the said section bar (17) being perpendicular to the said platform (13), and an upper side (17b) of the same being inclined toward the said transport means (40) and designed to guide the packages (2) ejected from the magazine (10) toward the said transport means (40);
at least one pressing element (18) for each stacking compartment (14), slidingly connected thereto and aimed at acting elastically on the external end of the said pile (11).

3. Distributor according to claim 1, characterised in that the said ejectors (30) comprise:
at least one pair of stems (31), rigidly fastened to the frame structure (1) by respective supports (32) coplanar with one another and perpendicular to the said stacks (11) of packages (2);
at least one crossbar (33), slidingly connected to the said stems (31) in correspondence with the seats (34) made in the said crossbar, featuring at its ends a pair of fixed gudgeons (35) and movable between a lowered position (A) and a raised position (B);
at least one electromagnet (36) for each stacking compartment (14) fastened laterally to the said crossbar (33) in correspondence with the relative stacking compartment (14) and aimed at binding, due to magnetic attraction, when activated, a correspondent pusher (37), so as to make it translate alternately between a rest position (E) and a working position (F);
at least one fixed guide (70) placed longitudinally, connected rigidly to the frame structure (1), parallel to the said crossbar (33) and aimed at guiding the said pushers (37) toward the said opening (15);
and in that the said control means (50) are situated symmetrically at both sides of the said magazines (10), and on each side they have:
at least one shaft (51) connected slidingly to the frame structure (1), in substantially vertical position, and equipped at its lower end with a roller (52), idling on its axis and running on a cam (53), so as to move the said shaft (51) from a lower extreme position (C) to an upper extreme position (D);
at least one horizontal bracket (54) for each magazine (10), equipped with an arm (57) and fastened movably to the said shaft (51), aimed at engaging, in correspondence with the shaft (51) external end, the correspondent fixed gudgeon (35) of the said crossbar (33).

4. Distributor according to claim 3, characterised in that the said pusher (37) includes an element (37a), extending toward the opening (15), by a terminal "L"-like portion (37b), and by a ferromagnetic block element (38), connected rigidly to the said terminal portion (37b) and facing the electromagnet (36).

5. Distributor according to claim 3, characterised in that the said pusher (37) is positioned in such a way that it strikes, during translation from the rest position (E) to the working position (F), the lowermost package (2) of the said stack (11), causing its ejection from the relative stacking compartment (14).

6. Distributor according to claim 3, characterised in that the said fixed guide (70) engages slidingly the pusher (37) in correspondence with a longitudinal groove (39), made in the lower end of the same pusher (37).

7. Distributor according to claim 1, characterised in that the said deflecting means (4) are formed by chutes, fastened alternately to the said magazines (10) on the opposite side of the second sector (1b) and equipped with extensions (4a) made of soft and elastic material.

8. Distributor according to claim 2, characterised in that there are other extensions (6), fastened to the said terminal elements (17) of the magazines (10), except for the lowest one.

9. Distributor according to claim 1, characterised in that the inclination of the said magazines 10 with respect to a horizontal plane is in the range of 20° and 25°.
